## Europäisches Patentamt

## European Patent Office

## Office européen des brevets

(19)

(11) Veröffentlichungsnummer: **0 284 662 B1**

(12) **EUROPÄISCHE PATENTSCHRIFT**

(45) Veröffentlichungstag der Patentschriff: **18.09.91**

(51) Int. Cl.⁵: **B60S 1/48**, F04D 29/70

(21) Anmeldenummer: **87118476.8**

(22) Anmeldetag: **14.12.87**

(54) Scheibenwaschanlage für Kraftfahrzeuge.

(30) Priorität: **26.03.87 DE 3709926**

(43) Veröffentlichungstag der Anmeldung:
**05.10.88 Patentblatt 88/40**

(45) Bekanntmachung des Hinweises auf die
Patenterteilung:
**18.09.91 Patentblatt 91/38**

(84) Benannte Vertragsstaaten:
**DE ES FR GB IT SE**

(56) Entgegenhaltungen:
**EP-A- 0 068 054          DE-A- 3 140 947**
**FR-A- 2 367 408          FR-A- 2 495 238**
**US-A- 2 784 876          US-A- 3 316 847**
**US-A- 4 461 614**

(73) Patentinhaber: **Dr.Ing.h.c. F. Porsche Aktien-**
**gesellschaft**
**Porschestrasse 42**
**W-7000 Stuttgart 40(DE)**

(72) Erfinder: **Binder, Hartmut**
**Schwabstrasse 2**
**W-7250 Leonberg(DE)**

## Beschreibung

Die Erfindung betrifft eine bekannte Scheibenwaschanlage für Kraftfahrzeuge gemäß dem Oberbegriff des Anspruchs 1.

Bei einer anderen, bekannten Scheibenwaschanlage (DE-U 1 949 575) ist zum Fördern der Waschflüssigkeit eine Zahnradpumpe vorgesehen, die von oben in eine Öffnung des Vorratsbehälters eingesetzt ist. Ein Saugrohr der Pumpeneinheit reicht annähernd bis zum Boden des Vorratsbehälters und ist endseitig mit einem Siebeinsatz verschlossen, wodurch ein Verstopfen der Spritzdüsen der Scheibenwaschanlage vermieden wird. Dieser Anordnung haftet der Nachteil an, daß derartige Zahnradpumpen teuer sind und einen großen Bauraum beanspruchen.

Zur Vermeidung der oben genannten Nachteile werden deshalb häufig Flügelradpumpen verwendet, die weniger Bauraum beanspruchen und kostengünstiger herstellbar sind. Bei diesen Flügelradpumpen ist innerhalb des Saugrohres ein rotierender Quirl vorgesehen, der das Saugrohrende um einen geringen Betrag überragt. Ferner sind am Saugrohrende diametral angeordnete, nach unten hin offene Ausnehmungen vorgesehen, so daß der Endbereich des Quirls direkten Kontakt mit der Waschflüssigkeit hat und die Flügelradpumpe selbstansaugend arbeitet.

Bei mit Flügelradpumpen ausgestatteten Scheibenwaschanlagen tritt in der Praxis das Problem auf, daß die Spritzdüsen durch Verunreinigungen oder kleine, in der Waschflüssigkeit enthaltene Partikel (z. B. von Reinigungstabletten) zugesetzt werden, da ein direktes Verschließen des Saugrohrendes mittels eines Siebeinsatzes aus Funktionsgründen nicht möglich ist. Denn würde man das Saugrohrende direkt mit einem Siebeinsatz verschließen, dann hätte der Quirl keinen unmittelbaren Kontakt mehr mit der Waschflüssigkeit und es würde am Quirlende ein Luftpolster gebildet, das bewirkt, daß die Förderpumpe nicht mehr selbstansaugend arbeitet.

Aufgabe der Erfindung ist es, an einer gattungsgemäßen Scheibenwaschanlage mit einer selbstansaugenden Flügelradpumpe solche Vorkehrungen zu treffen, daß bei guter Funktion der Flügelradpumpe ein Verstopfen der Spritzdüsen vermieden wird.

Erfindungsgemäß wird dies durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung eines den unteren Endbereich des Saugrohres umgebenden und örtlich mit Siebeinsätzen versehenen Siebelementes einerseits ein Verstopfen der Spritzdüsen vermieden wird und daß andererseits die selbstansaugende Wirkung der Flügelradpumpe stets gewährleistet ist, da das freie Ende des Quirls dauernd mit der Waschflüssigkeit in direktem Kontakt steht. Das Siebelement stellt ein einfach und kostengünstig herstellbares Bauteil dar. Durch die Klemmbefestigung des Siebelementes am Dichtkörper wird eine einfache und schnelle Montage des Siebelementes und der Förderpumpe erzielt. Außerdem ist das Siebelement leicht austauschbar.

Ein Ausführungsbeispiel der Erfindung ist in der Zeichnung dargestellt und wird im folgenden näher erläutert.

Es zeigt

Fig. 1    eine Schrägansicht auf einen Vorratsbehälter und eine Förderpumpe einer Scheibenwaschanlage für ein Kraftfahrzeug in verkleinertem Maßstab,

Fig. 2    einen Vertikalschnitt durch den Vorratsbehälter und die Förderpumpe in größerem Maßstab,

Fig. 3    eine Ansicht in Pfeilrichtung R der Fig. 2 in größerem Maßstab,

Fig. 4    eine Ansicht in Pfeilrichtung S der Fig. 2 in größerem Maßstab,

Fig. 5    eine Seitenansicht der Förderpumpe, teilweise im Schnitt.

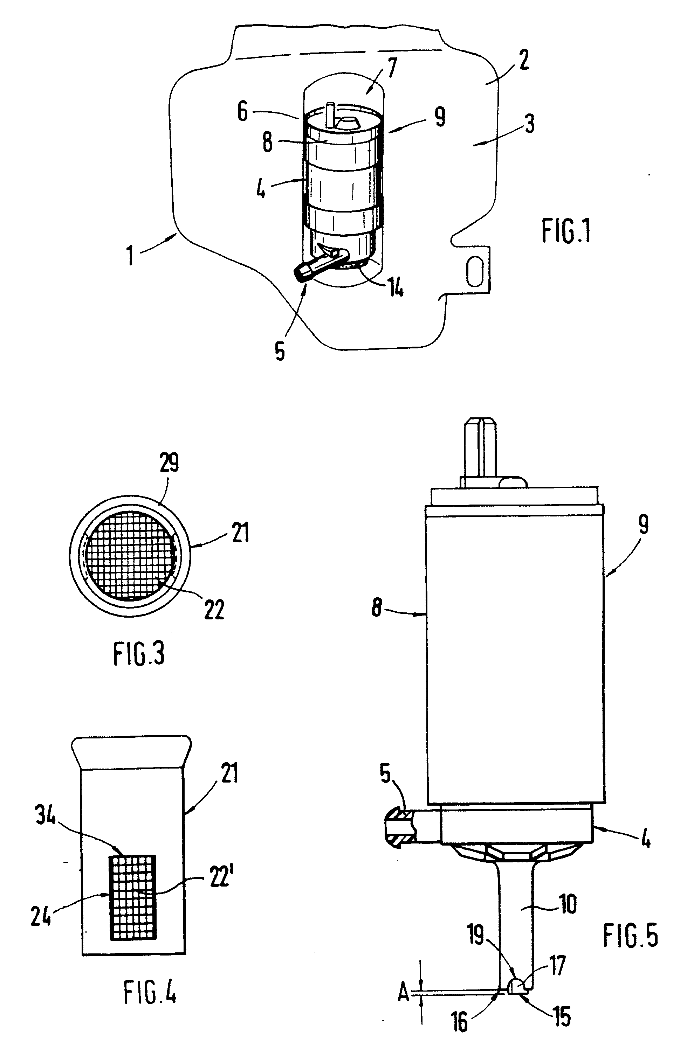

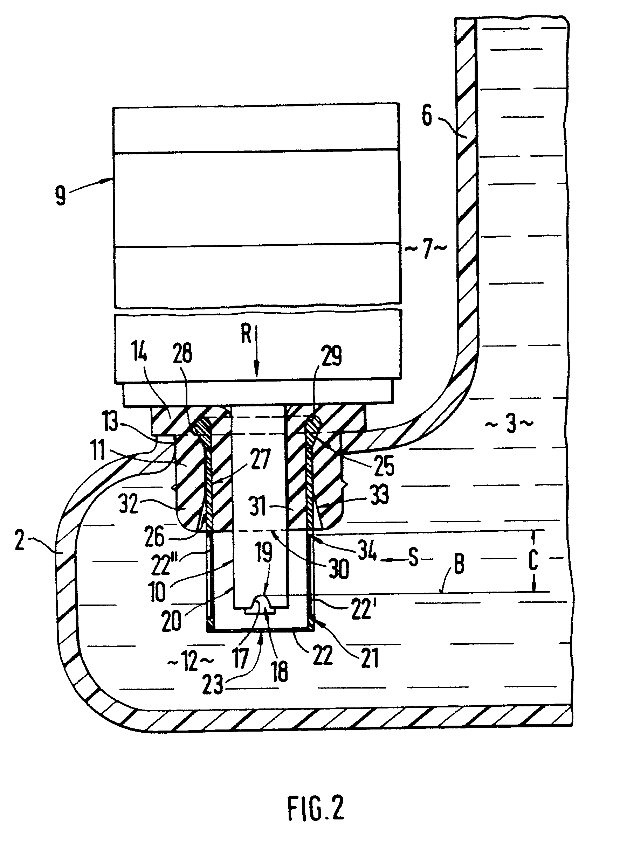

Die in Fig. 1 gezeigte Scheibenwaschanlage 1 für Sichtscheiben von Kraftfahrzeugen (Windschutzscheibe, Heckscheibe) oder Abdeckscheiben von Kraftfahrzeugleuchten umfaßt einen Vorratsbehälter 2 für die Waschflüssigkeit 3 und eine Förderpumpe 4, die über einen Anschlußstutzen 5 mit einer nicht näher dargestellten Leitung verbunden ist, welche zu einer Spritzdüse einer Sprüheinrichtung führt. Der aus Kunststoff bestehende Vorratsbehälter 2 weist in einer Seitenwand 6 eine nach außen offene Nische 7 zur Aufnahme einer aus der Förderpumpe 4 und einen Motor 8 bestehenden Baueinheit 9 auf.

Die Nische 7 ist seitlich von einem zylindrischen Wandabschnitt und unten von einem ebenen Wandabschnitt des Vorratsbehälters 2 begrenzt, wobei der Durchmesser des zylindrischen Wandabschnittes etwa dem Durchmesser des Gehäuses der Baueinheit 9 entspricht. Bei der Montage wird die Baueinheit 9 von oben in die Nische 7 eingeschoben, wobei ein Saugrohr 10 der Förderpumpe 4 unter Zwischenschaltung eines Dichtkörpers 11 in den Vorratsbehälter 2 eingesetzt wird. Das Saugrohr 10 ragt abschnittsweise in den Behälterinnenraum 12 hinein. Der aus Kunststoff oder Gummi gefertigte Dichtkörper 11 liegt einerseits am äußeren Umfang des Saugrohres 10 und andererseits am inneren Umfang einer Einführöffnung 13 des Vorratsbehälters 2 unter Vorspannung an. Außerhalb des Vorratsbehälters 2 weist der Dichtkörper 11 einen endseitigen Kragen 14 auf, der einen größeren Durchmesser besitzt als die Einführöffnung 13. Der Kragen 14 erstreckt sich zwischen der Oberseite der Einführöffnung 13 und der darüberliegenden Baueinheit 9.

Die Förderpumpe 4 wird im Ausführungsbeispiel durch eine Flügelradpumpe (Zentrifugalpumpe) gebildet, wobei innerhalb des Saugrohres 10 ein rotierender Quirl 15 angeordnet ist, der sich etwa bis zum freien untenliegenden Ende 16 des Saugrohres 10 erstreckt. Gemäß Fig. 5 überragt der Quirl 15 das Ende 16 des Saugrohres 10 um das Maß A nach unten hin. Ferner sind am Saugrohr 10 vorzugsweise zwei diametral gegenüberliegende, etwa halbkreisförmige ausgebildete Ausnehmungen 17 vorgesehen, die sich vom freien Ende 16 des Saugrohres 10 nach oben hin erstrecken. Durch diese Ausnehmungen 17 steht der untere Endbereich 18 des Quirls 15 unmittelbar mit der Waschflüssigkeit 3 in Kontakt und die Flügelradpumpe arbeitet selbstansaugend. Die Funktion der Flügelradpumpe ist dann gewährleistet, wenn die Waschflüssigkeit 3 ein Mindestniveau B oder einen höheren Flüssigkeitsstand aufweist. Das Mindestniveau B liegt auf einer horizontalen Ebene, die den oberen Rand 19 der Ausnehmung 17 tangiert.

Damit die Spritzdüsen der Scheibenwaschanlage 1 nicht durch Verunreinigungen oder kleine in der Waschflüssigkeit 3 enthaltene Partikel (z. B. von Reinigungstabletten) zugesetzt werden können, ist ein unterer Endbereich 20 des Saugrohres 10 von einem Siebelement 21 umgeben. Das Siebelement 21 ist topfförmig ausgebildet und kann entweder am gesamten Umfang oder aber nur örtlich mit Siebeinsätzen 22, 22', 22" versehen sein.

Entsprechend Fig. 2 ist am Boden 23 des Siebelementes 21 ein kreisförmiger Siebeinsatz 22 vorgesehen, der etwa die Größe der inneren Querschnittsfläche des Siebelementes 21 aufweist. Ferner sind an der Mantelfläche 24 zwei diametral gegenüberliegende Siebeinsätze 22', 22" angeordnet, die in der Seitenansicht gesehen etwa rechteckförmig ausgebildet sind. Das topfförmige Siebelement 21 ist nach Fig. 2 zylindrisch ausgebildet und verläuft radial und axial mit Abstand zum Saugrohr 10. Die an der Mantelfläche 24 angeordneten Siebeinsätze 22', 22" überragen den oberen Rand 19 der am Saugrohr 10 angebrachten Ausnehmung 17 um einen Betrag C. Dadurch ist sichergestellt, daß das untere Ende 18 des Quirls 15 ständig mit der Waschflüssigkeit 3 in Berührung steht. Das Siebelement 21 kann entweder am Saugrohr 10 oder aber am darüberliegenden Dichtkörper 11 befestigt sein.

Eine besonders einfache und kostengünstige Halterung des Siebelementes 21 wird gemäß Fig. 2 dadurch erreicht, daß das Siebelement 21 über eine Klemmbefestigung 25 mit dem Dichtkörper 11 zusammenwirkt. Hierzu ist am Dichtkörper 11 eine in der Draufsicht gesehen kreisringförmige Nut 26 vorgesehen, die nach unten hin offen ausgebildet ist und in die ein oberer Abschnitt 27 des Siebelementes 21 eingesetzt ist. Der obere Abschnitt 27 des Siebelementes 21 ist mit dem Dichtkörper 11 form- und kraftschlüssig verbunden. Am oberen Rand 28 des Siebelementes 21 ist eine Querschnittserweiterung 29 vorgesehen, die beispielsweise tropfenförmig ausgebildet ist.

Der Innendurchmesser des Siebelementes 21 ist über seine gesamte Höhenerstreckung gesehen konstant.

Die Nut 26 am Dichtkörper 11 erstreckt sich etwa vom Kragen 14 des Dichtkörpers 11 bis zu dessen Bodenfläche 30. Der Dichtkörper 11 wird durch die Nut 26 in einen inneren Ring 31 und einen äußeren Ring 32 unterteilt, zwischen denen das Siebelement 21 aufgenommen ist. Benachbart der Bodenfläche 30 ist am äußeren Ring 32 auf der dem Siebelement 21 zugekehrten Seite eine kegelförmige Anlaufschräge 33 vorgesehen, die die Montage des Siebelementes 21 erleichtert.

Eine obere Begrenzungskante 34 der mantelseitigen Siebeinsätze 22', 22" verläuft angrenzend an die Bodenfläche 30 des Dichtelementes 11.

Das Siebelement 21 ist aus einem geeigneten Kunststoff gefertigt. Die Siebeinsätze 22 sind ebenfalls aus Kunststoff oder aus Metall hergestellt und weisen eine entsprechende Maschenweite auf.

**Patentansprüche**

1. Scheibenwaschanlage (1) für Kraftfahrzeuge mit einem Vorratsbehälter (2) für die Waschflüssigkeit (3) und einer selbstansaugenden Flügelradpumpe (4), wobei ein Saugrohr (10) der Flügelradpumpe (4) unter Zwischenschaltung eines Dichtkörpers (11) in den Vorratsbehälter (2) eingesetzt ist und abschnittsweise in den Behälterinnenraum (12) hineinragt und daß ein innerhalb des Saugrohres (10) befindlicher rotierender Quirl (15) etwa bis zum freien Ende des Saugrohres (10) reicht und dort über wenigstens eine am Umfang des Saugrohres (10) vorgesehene, nach unten hin offene Ausnehmung (17) unmittelbar mit der Waschflüssigkeit (3) in Berührung steht, dadurch gekennzeichnet, daß ein unterer Endbereich (20) des Saugrohres (10) bzw. des Quirls (15) von einem topfförmigen Siebelement (21) umgeben ist, das radial und axial mit Abstand zum Saugrohr (10) bzw. Quirl (15) verläuft, wobei der einerseits am äußeren Umfang des Saugrohres (10) und andererseits am inneren Umfang einer Einführöffnung (13) des Vorratsbehälters (2) unter Vorspannung anliegende Dichtkörper (11) eine kreisringförmige, nach unten hin offene Nut (26) aufweist, in die ein oberer Abschnitt (27) des Siebelements (21) eingesetzt und form- und kraftschlüssig in Lage gehalten ist.

2. Scheibenwaschanlage nach Anspruch 1, dadurch gekennzeichnet, daß am Siebelement (21) zumindest an der Mantelfläche (24) und gegebenenfalls auch am Boden (23) Siebeinsätze (22, 22', 22") vorgesehen sind.

3. Scheibenwaschanlage nach Anspruch 2, dadurch gekennzeichnet, daß der Siebeinsatz (22) am Boden (23) des Siebelementes (21) kreisförmig ausgebildet ist und etwa die Größe der inneren Querschnittsfläche des Siebelementes (21) aufweist.

4. Scheibenwaschanlage nach Anspruch 2, dadurch gekennzeichnet, daß an der Mantelfläche (24) zwei diametral gegenüberliegende Siebeinsätze (22', 22") vorgesehen sind, wobei diese Siebeinsätze (22', 22") den oberen Rand (19) der am Saugrohr (10) angeordneten Ausnehmung (17) um einen Betrag (C) überragen.

5. Scheibenwaschanlage nach Anspruch 1, dadurch gekennzeichnet, daß das Siebelement (21) an seinem oberen Rand (28) eine Querschnittserweiterung (29) aufweist.

## Claims

1. A windscreen-washing unit (1) for motor vehicles, having a storage container (2) for the washing liquid (3) and a self-priming vane-type pump (4), a suction tube (10) of the vane-type pump (4) being inserted into the storage container (2) with the interposition of a sealing member (11) and projecting in part into the interior (12) of the container, and a rotating agitator (15) present inside the suction tube (10) extending substantially as far as the free end of the suction tube (10) and being directly in contact there with the washing liquid (3) by way of at least one opening (17) open at the bottom and provided on the periphery of the suction tube (10), characterized in that a lower end area (20) of the suction tube (10) or of the agitator (15) respectively is surrounded by a cup-shaped screen member (21) extending radially and axially at a distance from the suction tube (10) and agitator (15) respectively, the sealing member (11), which rests under pretensioning on one side on the outer periphery of the suction tube (10) and on the other side on the inner periphery of an insertion opening (13) in the storage container (2), having a circular annular groove (26) which is open at the bottom and into which an upper portion (27) of the screen member (21) is inserted and held in position with positive and non-positive locking.

2. A windscreen-washing unit according to Claim 1, characterized in that screen inserts (22, 22', 22") are provided on the screen member (21) at least on the generated surface (24) and where appropriate also on the base (23).

3. A windscreen-washing unit according to Claim 2, characterized in that the screen insert (22) on the base (23) of the screen member (21) is made circular and is substantially the size of the internal cross-sectional area of the screen member (21).

4. A windscreen-washing unit according to Claim 2, characterized in that two diametrically opposite screen inserts (22', 22") are provided on the generated surface (24), the said screen inserts (22', 22") projecting by an amount (C) beyond the upper edge (19) of the opening (17) provided on the suction tube (10).

5. A windscreen-washing unit according to Claim 1, characterized in that the screen member (21) has a cross-sectional enlargement at its upper edge (28).

## Revendications

1. Installation de lave-glace (1) pour véhicules automobiles comportant un réservoir (2) pour le liquide de lavage (3) et une pompe à roue à ailettes (4) auto-aspirante, un tube d'aspiration (10) de la pompe à roue à ailettes (4) étant introduit dans le réservoir (2), par insertion d'un corps d'étanchéité (11), et pénétrant en partie à l'intérieur (12) du réservoir et en ce qu'un agitateur (15) tournant à l'intérieur du tube d'aspiration (10) s'étend à peu près jusqu'à l'extrémité libre du tube d'aspiration (10) où il est en contact direct avec le liquide de lavage (3), par au moins un évidement (17) ouvert vers le bas, prévu sur le pourtour du tube d'aspiration (10), caractérisée en ce qu'une région terminale (20) inférieure du tube d'aspiration (10) ou de l'agitateur (15) est entourée par un élément de filtrage (21) en forme de pot qui s'étend radialement et axialement à une certaine distance du tube d'aspiration (10) ou de l'agitateur (15), le corps d'étanchéité (11) s'appliquant, sous précontrainte, d'une part contre le pourtour extérieur du tube d'aspiration (10) et d'autre part contre le pourtour intérieur d'une ouverture d'introduction (13) du réservoir (2) présentant une rainure (26) en forme d'anneau circulaire, ouverte vers le bas, dans laquelle une partie supérieure (27) de l'élément de filtrage (21) est insérée et maintenue dans sa position, par concordance de forme et par force.

2. Installation de lave-glace selon la revendication 1, caractérisée en ce qu'il est prévu des garnitures de filtrage (22, 22', 22") sur l'élément de filtrage (21), au moins sur la surface d'enveloppe (24) et éventuellement aussi sur le fond (23).

3. Installation de lave-glace selon la revendication 2, caractérisée en ce que la garniture de filtrage (22) placée au fond (23) de l'élément de filtrage (21) est circulaire et présente à peu près les dimensions de la section intérieure de l'élément de filtrage (21).

4. Installation de lave-glace selon la revendication 2, caractérisée en ce qu'il est prévu sur la surface d'enveloppe (24), deux garnitures de filtrage (22', 22") diamétralement opposées, ces garnitures de filtrage (22', 22") dépassant, d'une valeur (C), le bord supérieur (19) de l'évidement (17) prévu sur le tube d'aspiration (10).

5. Installation de lave-glace selon la revendication 1, caractérisée en ce que l'élément de filtrage (21) présente un élargissement de section (29) sur son bord supérieur (28).

FIG.1

FIG.3

FIG.4

FIG.5

FIG.2